# FASCICULE DE BREVET EUROPEEN

(11) **EP 0 541 444 B1**
(45) Date de publication et mention de la délivrance du brevet: **27.03.1996**
(21) Numéro de dépôt: 92402992.9
(22) Date de dépôt: 05.11.1992
(51) Int. Cl.: E01F 9/011

(54) **Piètement modulaire de meuble, notamment pour meuble d'extérieur**
Elementsammlung für Untergestell für Möbel, insbesondere für Strassenmöbel
Modular support for furniture, in particular for street furniture

(30) Priorité: 08.11.1991 FR 9113793
(43) Date de publication de la demande: 12.05.1993
(73) Titulaire: ETABLISSEMENTS DECAYEUX, F-80210 Feuquières-en-Vimeu (FR)
(72) Inventeur: Decayeux, Etienne, F-80210 Feuquières-en-Vimeu (FR)
(74) Mandataire: Lhuillier, René

(56) Documents cités:
- FR-A- 2 508 119
- FR-A- 2 635 551
- GB-A- 1 376 126
- GB-A- 2 137 795
- US-A- 4 327 514
- SPANDEX 'prijzen signbuild buitenbewegwijzering en component and assembly guide.', 1 Septembre 1990, SPANDEX, fitting a monoframe to post.

## Description

L'invention est relative à un dispositif mobilier, notamment pour meuble d'extérieur, comportant un meuble et un piètement de meuble. Le problème qu'elle vise à résoudre est de proposer un piètement facilement adaptable à plusieurs types de meubles et permettant par ailleurs un assemblage rapide du piètement et du meuble, et si nécessaire un démontage rapide de cet assemblage.

On connaît déjà, par le document SPANDEX 'Prijzen signbuild buitenbewegwijzering' avec 'Component and assembly guide' du 1er septembre 1990, un piètement de meuble comprenant au moins un pied qui comporte un profilé creux définissant une rainure intérieure, cette rainure présentant une largeur maximale déterminée et débouchant à l'extérieur du profilé par une fente, cette fente présentant une largeur inférieure à ladite largeur maximale, et des moyens d'assemblage pour assembler le meuble sur le pied, qui présentent en section transversale une forme adaptée à celle de ladite rainure et sont reçus dans celle-ci. Dans ce document, les moyens d'assemblage sont constitués par des boulons.

Un autre piètement de ce genre est connu du document FR-A-2.635.551. Ici, les moyens d'assemblage sont constitués par un curseur à verrouillage "quart de tour" et blocage complémentaire par une vis.

Le but de l'invention est de proposer un dispositif mobilier du genre cité au début de l'exposé, dans lequel l'assemblage du piètement au meuble sur site puisse s'effectuer d'une manière plus rapide que dans les exemples précités, donc en particulier sans utiliser de vis de fixation.

A cet effet, lesdits moyens d'assemblage comprennent un noyau plein, solidaire d'une face latérale du meuble, faisant saillie sur celle-ci et s'étendant le long de celle-ci sur une longueur telle qu'il se prolonge au-delà d'une face inférieure du meuble jusqu'à une extrémité du pied destinée à reposer sur le sol, ce noyau étant agencé pour pouvoir supporter au moins une partie du poids du meuble.

D'autres détails et avantages de l'invention apparaîtront au cours de la description suivante de quelques formes de réalisation préférées mais non limitatives, en regard des dessins annexés sur lesquels :
La figure 1 est une vue en élévation d'une batterie de boîtes aux lettres équipée du piètement selon l'invention, en coupe partielle selon la ligne I-I des figures 2 et 3 ;
Les figures 2 et 3 sont des coupes transversales d'un pied selon les lignes II-II et III-III respectivement de la figure 1 ;
La figure 4 est une vue en élévation d'une extrémité inférieure d'un pied, en coupe partielle selon la ligne I-I de la figure 2 ;
La figure 5 est une vue de dessus d'une extrémité supérieure d'un pied constituant le piètement de la figure 1, ce pied comprenant seulement une demi-coquille ;
La figure 6 est une vue correspondante d'une variante de réalisation dans laquelle le pied comprend deux demi-coquilles ;
La figure 7 est une vue en élévation de l'extrémité supérieure du pied de la figure 6 ;
La figure 8 est une vue en coupe transversale d'un pied constituant une variante de celui de la figure 2 ;
La figure 9 est une vue en élévation d'un panneau indicateur équipé d'un pied selon l'invention, en coupe partielle selon la ligne IX-IX des figures 10 et 11 ;
Les figures 10 et 11 sont des vues en coupe transversale du pied selon la figure 9, effectuées selon les lignes X-X et XI-XI respectivement de cette figure ;
La figure 12 est une vue de face et en élévation d'un tableau d'affichage selon l'invention, en coupe partielle ;
Les figures 13 à 15 illustrent une équerre utilisée dans le tableau d'affichage de la figure 12, la figure 14 étant une vue de face, la figure 15 une vue de côté et la figure 13 une vue en coupe selon la ligne XIII-XIII de la figure 14 ; et
Les figures 16 et 17 représentent une variante de réalisation des figures 13 et 14.

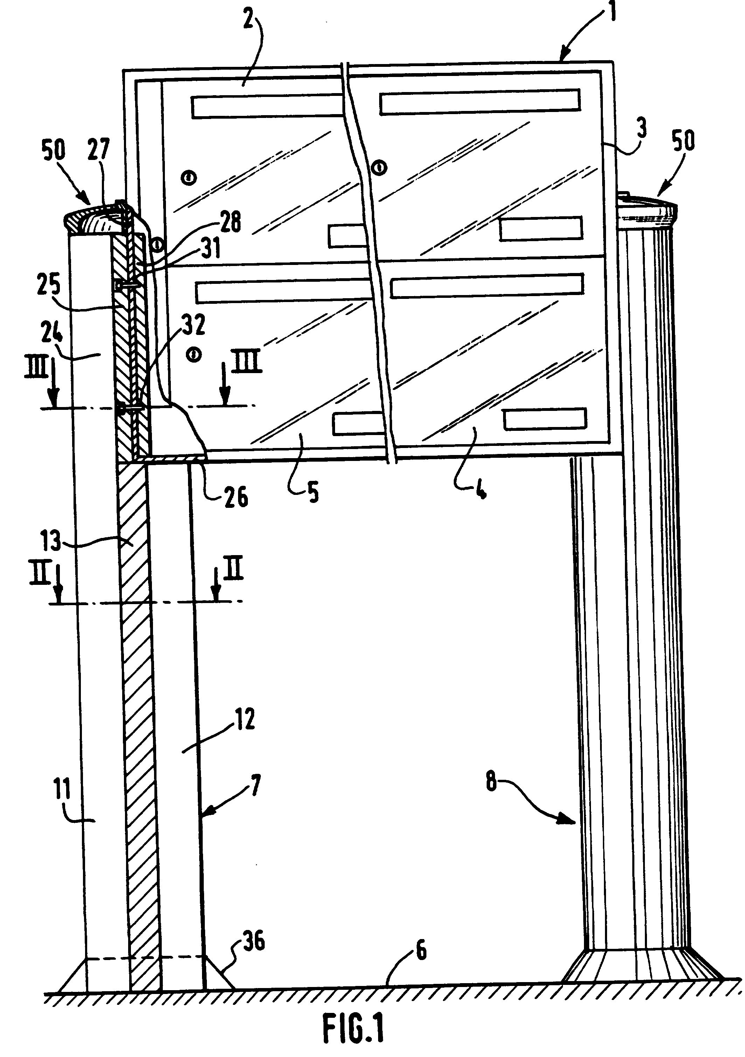

Sur la figure 1 est représenté un boîtier 1 constituant une batterie de boîtes aux lettres et comprenant à cet effet de façon connue en soi quatre boîtes aux lettres juxtaposées 2, 3, 4, 5. Le boîtier 1 est destiné à être installé à l'extérieur, en étant fixé sur le sol 6 au moyen de deux pieds 7, 8.

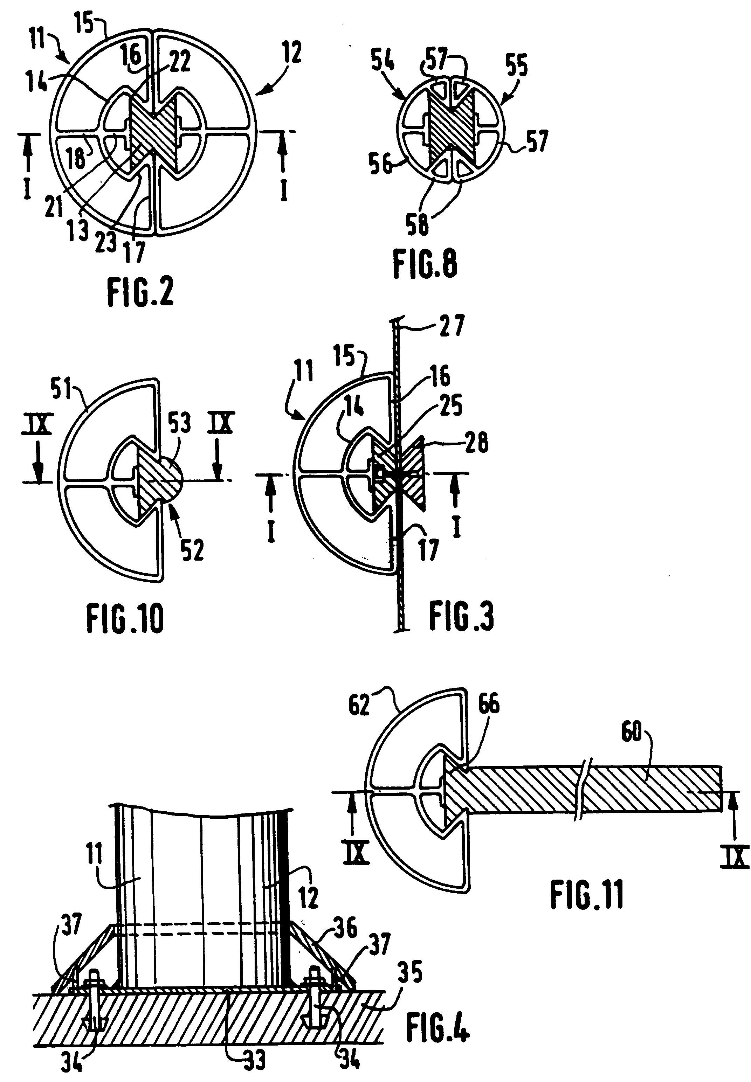

Chaque pied 7, 8 comprend deux demi-coquilles 11, 12 juxtaposées et réunies par un noyau 13 en double queue-d'aronde, lequel présente donc une forme générale de X. Chaque demi-coquille est creuse et présente, observée en section, un arceau 14 en forme de Ω disposé à l'intérieur et orienté de la même façon qu'un arceau semi-circulaire 15 (figures 2 et 3). Deux extrémités de l'arceau en forme de Ω 14 sont reliées à celles de l'arceau semi-circulaire 15 par deux nervures 16, 17 tandis que ces deux arceaux sont reliés entre eux dans une région médiane de ceux-ci par une nervure 18. A l'opposé de la nervure 18, une nervure en T 21 s'étend à l'intérieur de l'arceau en forme de Ω 14. Les deux demi-coquilles 11, 12 ont donc une forme générale de tube de section semi-circulaire. Chaque arceau 14 en forme de Ω forme avec sa nervure en T 21, une rainure de section en forme de queue-d'aronde.

Les deux demi-coquilles 11, 12 sont disposées l'une contre l'autre par leurs nervures 16, 17 respectives de façon à constituer un pied de section circulaire. Le noyau en double queue-d'aronde 13 présente une forme adaptée à celle des rainures en queue-d'aronde définies par les demi-coquilles 11, 12 de sorte qu'il peut être glissé simultanément dans ces deux rainures. Dans chaque rainure, le noyau en double queue-d'aronde est en contact d'une part avec deux flancs 22, 23 de chaque arceau en forme de Ω et d'autre part avec la nervure en T 21 de celui-ci. Le noyau en double queue-d'aronde 13 et la demi-coquille 12 s'étendent sur une même hauteur tandis que la demi-coquille 11 s'étend sur une hauteur sensiblement plus importante que ces derniers selon un prolongement 24. Sur toute sa longueur, le prolongement 24 est traversé par un noyau en simple queue-d'aronde 25 présentant une section en forme en forme générale de trapèze.

Le boîtier 1 s'appuie, par une face inférieure 26, sur une extrémité du noyau en double queue-d'aronde 13 et de la demi-coquille 12. Il présente deux faces latérales 27 qui sont en contact avec les nervures 16, 17 de la demi-coquille correspondante et avec le noyau en simple queue-d'aronde 25.

Un noyau en simple queue-d'aronde intérieur 28 est disposé dans le boîtier 1 et présente une longueur sensiblement identique au noyau en simple queue-d'aronde extérieur 25 précité. Ces deux noyaux sont réunis entre eux de façon à pincer la face latérale 27 du boîtier 1 dans une région médiane de celle-ci tel qu'observé dans le sens de la profondeur du boîtier 1, au moyen de deux vis 31, 32 noyées dans l'épaisseur du noyau en simple queue-d'aronde extérieur 25, traversant la face latérale 27 du boîtier 1 et se vissant dans deux taraudages correspondants pratiqués dans le noyau en simple queue-d'aronde intérieur 28.

Telle que représentée sur la figure 4, une extrémité inférieure de chaque pied 7, 8 porte une plaque transversale 33 faisant saillie autour du pied et traversée par des boulons 34 noyés dans une embase en ciment 35, ces boulons traversant la plaque 33 et recevant des écrous pour la fixation de celle-ci. Un sabot 36 en forme de tronc de cône entoure le pied 7, 8 de façon à coiffer la plaque 33. Le sabot 36 présente, sur une face intérieure, plusieurs doigts filetés 37 destinés à s'encliqueter dans des trous prévus dans la plaque 33.

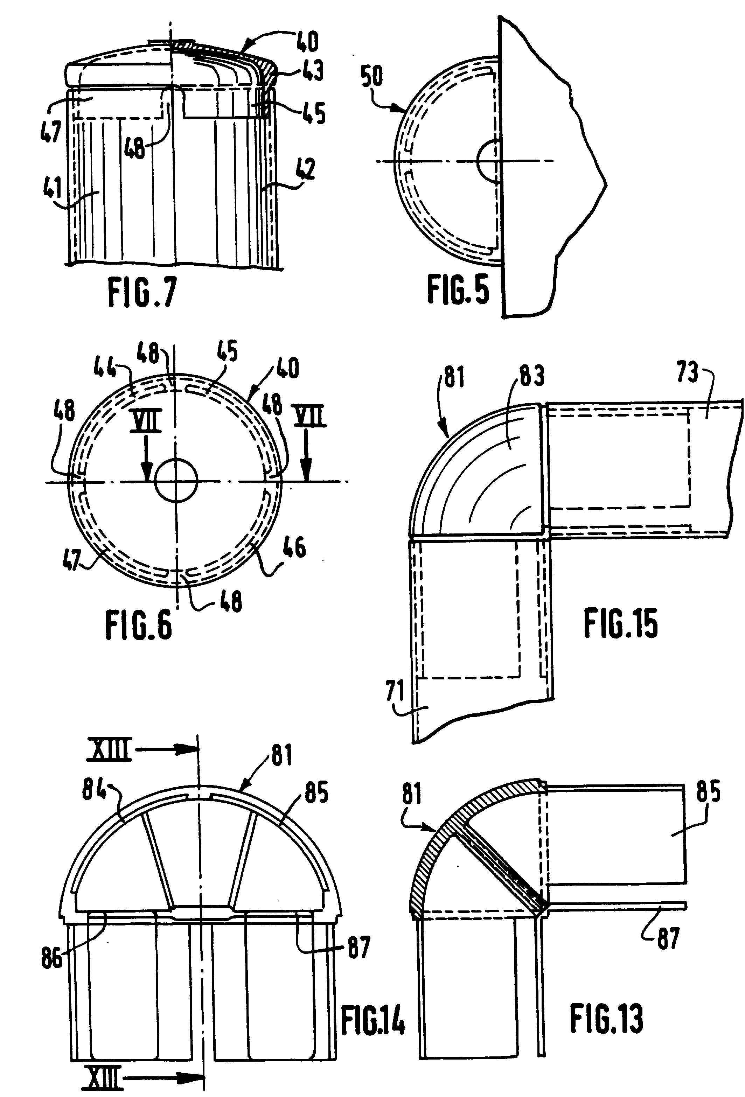

Sur les figures 6 et 7, deux demi-coquilles 41, 42 de même hauteur sont coiffées par un capuchon commun 40. Ce capuchon, en forme de coupe circulaire, présente un bord latéral 43 prolongé par quatre ailettes 44 à 47 réparties autour du capuchon, chacune s'étendant sensiblement sur un peu moins du quart de la circonférence du bord latéral 43. Deux ailettes quelconques sont séparées par un évidement 48 en forme de U.

Le capuchon 40 est agencé pour coiffer les demi-coquilles 41, 42 de façon que seules ses ailettes 44 à 47 s'étendent à l'intérieur de celles-ci, les évidements en forme U 48 chevauchant respectivement les deux nervures 18 d'une part et les deux groupes de nervures accolées 16,16 et 17,17 d'autre part.

La figure 5 représente un capuchon semi-circulaire 50 qui équipe les pieds 7, 8 du piètement de la figure 1, ce capuchon étant conçu selon le même principe que celui 40 des figures 6 et 7.

En ce qui concerne le montage du dispositif de la figure 1, les pieds 7, 8 sont assemblés en usine : les deux demi-coquilles 11, 12 sont réunies en glissant entre celles-ci le noyau en double queue-d'aronde 13, et la plaque 33 est soudée à l'extrémité inférieure du pied. Sur site, ce pied est fixé sur l'embase 35, et le sabot 36 est ramené sur cette dernière. Le boîtier 1 est alors monté sur les pieds 7, 8 de façon que ses noyaux en simple queue-d'aronde extérieurs 25 soient reçus dans les prolongements 24 des pieds jusqu'à venir buter sur les noyaux en double queue-d'aronde 13 et les demi-coquilles 12. Les deux capuchons semi-circulaires 50 sont alors glissés à l'extrémité libre des deux pieds 7, 8. On constate que le démontage du boîtier 1 en vue de sa maintenance ou de son remplacement s'effectue de façon très simple par un mouvement de coulissement vers le haut, après retrait des capuchons 50.

Selon une variante de réalisation, les pieds comprennent (figure 10) une seule demi-coquille 51 correspondant à la demi-coquille 11 précitée, le noyau en double queue-d'aronde 13 étant remplacé par un noyau 52 en simple queue-d'aronde faisant saillie à l'extérieur de la demi-coquille 51 selon un bourrelet semi-circulaire 53.

Selon une autre variante de réalisation dérivant de la précédente, le bourrelet semi-circulaire 53 est absent.

Selon encore une autre forme de réalisation (figure 8), chaque demi-coquille 54, 55 ne comprend qu'un seul arceau, à savoir un arceau 56, 57 respectivement en forme de Ω et présentant deux prolongements latéraux 57, 58 de façon à définir avec l'arceau de l'autre demi-coquille un pied circulaire de plus petit diamètre que ceux 7, 8 de la figure 1.

Les figures 9 et 11 représentent un panneau indicateur 60 fixé au sol par un pied 61. Le pied 61 comporte une demi-coquille longue 62 et une demi-coquille courte 63 réunies entre elles au moyen d'un noyau 64 en double queue-d'aronde selon un agencement conforme à celui décrit en référence à la figure 2. Cette première portion de pied est surmontée par une seconde portion de pied comprenant, outre la demi-coquille longue 62, un noyau 65 en simple queue-d'aronde et bourrelet semi-circulaire selon un agencement identique à celui décrit en regard de la figure 10.

Enfin, dans une troisième portion de pied surmontant la seconde, la demi-coquille longue 62 coopère avec le panneau indicateur 60. A cet effet, le panneau indicateur, qui est constitué d'une plaque, présente un bord latéral 66 faisant saillie par rapport aux faces du panneau indicateur de façon à former une simple queue-d'aronde. Le bord 66 en simple queue-d'aronde du panneau indicateur 60 est reçu dans la rainure en queue-d'aronde de la demi-coquille longue 62.

En conséquence, le panneau indicateur 60 est soutenu verticalement par le noyau en simple queue-d'aronde et bourrelet semi-circulaire 65, sur lequel il repose directement, ce noyau étant lui-même soutenu par le noyau en double queue-d'aronde 64, lequel repose sur le sol. La demi-coquille coquille courte 63 est coiffée d'un capuchon semi-circulaire 67 identique au capuchon 50 précité tandis que la demi-coquille longue 62 est coiffée d'un capuchon circulaire 68 coiffant également une partie du panneau indicateur 60 : ce capuchon est semblable à celui 40 précité mais ne comporte toutefois que deux ailettes situées du côté où il coopère avec la demi-coquille.

Sur la figure 12, est représentée une autre variante de réalisation de l'invention pour supporter un tableau d'affichage 70. Le piètement comprend deux montants 71, 72 et deux traverses 73, 74 consistant tous en une demi-coquille semblable à celle 11 de la figure 2, s'appliquant par sa face plate sur une face latérale du tableau d'affichage. Dans cet exemple, le tableau d'affichage présente une épaisseur sensiblement égale à la largeur des demi-coquilles. Dans une partie située sous le tableau d'affichage 70, chaque montant 71, 72 est équipé d'un noyau à simple queue-d'aronde 75 comparable à celui 25 de la figure 3. Comme le boîtier de boites aux lettres de la figure 1, le tableau d'affichage 70 est équipé, sur deux faces latérales, de deux noyaux à simple queue-d'aronde 76, 77 pinçant cette face latérale, d'une manière analogue à ce qui est représenté en figure 3. La figure 3 illustre donc aussi une coupe effectuée selon la ligne A-A de la figure 12.

La traverse inférieure 74 comporte, à chacune de ses extrémités, une portion de noyau à simple queue-d'aronde 78, 79 de même type que le noyau 25 de la figure 3 (ligne B-B de la figure 12). La traverse inférieure 74 est située à une hauteur telle que ses portions de noyau 78, 79 affleurent respectivement les extrémités supérieures des noyaux à simple queue-d'aronde 75. Une vis 80, noyée dans le noyau à simple queue-d'aronde 75, traverse celui-ci pour se visser dans la portion de noyau à simple queue-d'aronde 78, 79 respective.

Les figures 13 à 15 précisent le mode de liaison entre la traverse supérieure 73 et les montants 71, 72. La liaison s'effectue au moyen de deux équerres 81, 82, chacune comprenant une portion sphérique 83 correspondant à un quart de sphère prolongée, selon deux côtés perpendiculaires, par quatre ailettes disposées à la périphérie de l'équerre et comprenant deux ailettes arrondies 84, 85 et deux ailettes droites 86, 87. Les ailettes arrondies 84, 85 sont destinées à s'appliquer contre une surface intérieure de l'arceau semi-circulaire des demi-coquilles constituant les montants et les traverses, en chevauchant une nervure analogue à la nervure 18 de la figure 2, tandis que les ailettes droites sont destinées à s'appliquer contre des nervures telles que les nervures 16, 17 de la figure 2.

Le tableau d'affichage 70 est inséré par coulissement dans les montants 71, 72 de la même manière que le boîtier de boîtes aux lettres 1 de la figure 1.

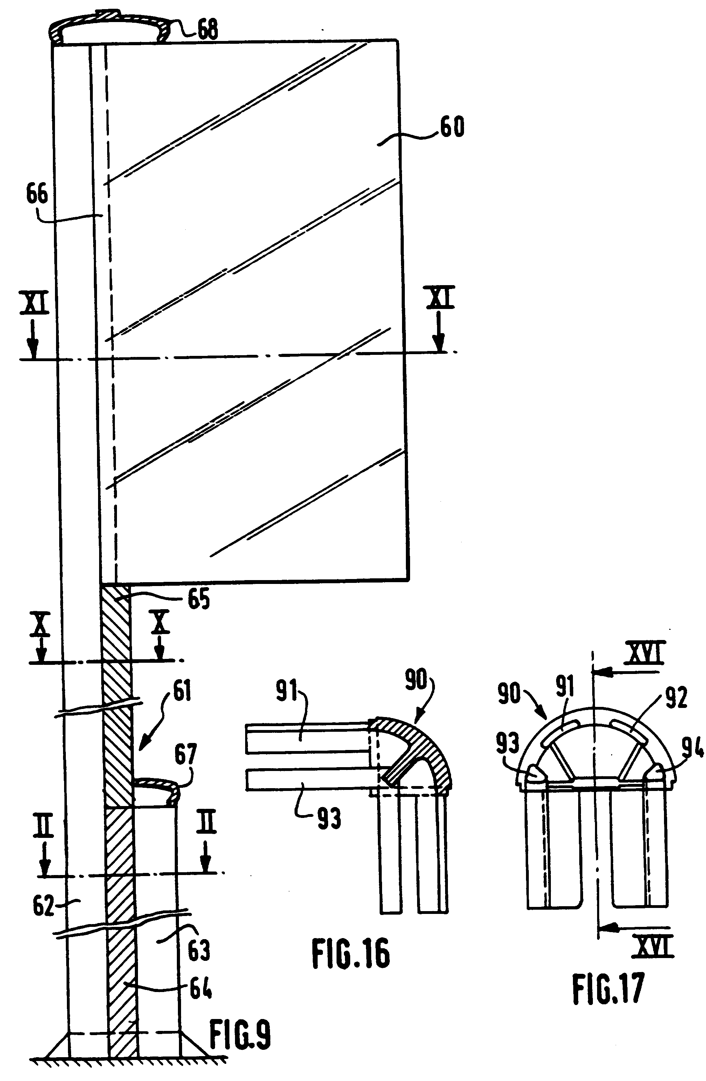

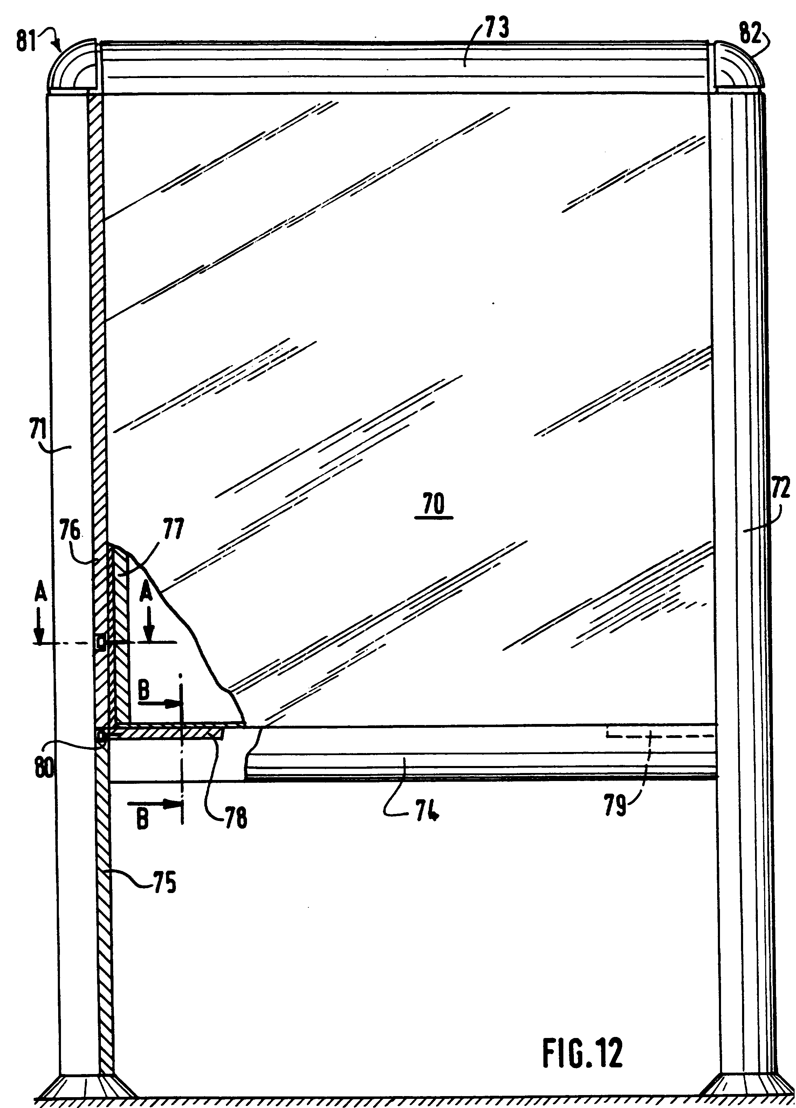

Les figures 16 et 17 représentent une équerre 90 adaptée à une demi-coquille de petit diamètre, du type de celles représentées sur la figure 8. Elle comporte, comme les équerres 81,82 précitées, deux ailettes arrondies 91, 92 mais en diffèrent toutefois par le fait que les ailettes 3 sont remplacées par deux doigts 93, 94 destinés à se loger à l'intérieur des prolongements latéraux 57, 58 (figure 8) de ces demi-coquilles.

On notera que, très avantageusement, les éléments massifs constitués par les noyaux renforcent mécaniquement les demi-coquilles. De préférence, les différents éléments constitués par les demi-coquilles, les noyaux, les capuchons et les équerres sont constitués d'un matériau métallique léger tel que l'aluminium.

## Revendications

1. Dispositif mobilier, notamment pour meuble d'extérieur, comportant un meuble (1,60,70) et un piètement de meuble, le piètement comprenant :
- au moins un pied (7) qui comporte un profilé creux (11) définissant une rainure intérieure, cette rainure présentant une largeur maximale déterminée et débouchant à l'extérieur du profilé par une fente, cette fente présentant une largeur inférieure à ladite largeur maximale ; et
- des moyens d'assemblage (25) pour assembler le meuble sur le pied, qui présentent en section transversale une forme adaptée à celle de ladite rainure et sont reçus dans celle-ci,
caractérisé en ce que lesdits moyens d'assemblage comprennent un noyau plein (25), solidaire d'une face latérale du meuble, faisant saillie sur celle-ci et s'étendant le long de celle-ci sur une longueur telle qu'il se prolonge au-delà d'une face inférieure du meuble jusqu'à une extrémité du pied (7) destinée à reposer sur le sol, ce noyau étant agencé pour pouvoir supporter au moins une partie du poids du meuble.

2. Dispositif mobilier selon la revendication 1, dans lequel ledit noyau plein comprend plusieurs portions disposées dans le prolongement l'une de l'autre, à savoir :
- une première portion (25) s'étendant le long de la face latérale du meuble jusqu'à la face inférieure de celui-ci et présentant une première forme de section logée toute entière dans la rainure ; et
- au moins une seconde portion (13) s'étendant au-delà de ladite face inférieure jusqu'à l'extrémité du pied destinée à reposer sur le sol, et présentant une seconde forme de section s'étendant, telle qu'observée en section transversale, à l'extérieur de la rainure selon une extension déterminée.

3. Dispositif mobilier selon la revendication 2, qui comprend un second profilé creux (12) agencé pour prendre appui latéralement sur le premier profilé creux (11), ce second profilé définissant une rainure intérieure, cette rainure présentant une largeur maximale déterminée et débouchant à l'extérieur du profilé par une fente, cette fente présentant une largeur inférieure à ladite largeur maximale, ladite extension de la seconde portion de noyau (53) ayant, en section transversale, une forme adaptée à la rainure du second profilé et étant reçue dans celle-ci.

4. Dispositif mobilier selon la revendication 2 ou la revendication 3, dans lequel ladite extension de la seconde portion de noyau (65) affleure la face inférieure du meuble (60) et lui sert d'appui.

5. Dispositif mobilier selon l'une quelconque des revendications 2 à 4, dans lequel les différentes portions (25, 13) de noyau sont constituées par des noyaux distincts prenant appui les uns sur les autres.

6. Dispositif mobilier selon l'une quelconque des revendications précédentes, dans lequel lesdits pieds sont au nombre de deux, comprenant deux profilés creux (71, 72) recevant chacun un noyau (76), un troisième profilé creux (74) étant agencé pour s'appliquer latéralement sur la face inférieure du meuble en s'étendant d'un pied à l'autre et définissant une rainure intérieure, cette rainure présentant une largeur maximale déterminée et débouchant à l'extérieur du profilé par une fente, cette fente présentant une largeur inférieure à ladite largeur maximale, et un troisième noyau (78) ayant, en section transversale, une forme adaptée à la rainure du troisième profilé (74) étant reçu dans celle-ci, ce troisième noyau ayant deux extrémités faisant face aux noyaux (76) des pieds et fixées à ceux-ci.

7. Dispositif mobilier selon l'une quelconque des revendications précédentes, dans lequel la rainure et le noyau (25) présentent une section transversale en forme de queue-d'aronde.

8. Dispositif mobilier selon la revendication 3, dans lequel les rainures des premier et second profilés creux (11, 12) présentent une section transversale en forme de queue-d'aronde tandis que la seconde portion (13) du noyau présente une section transversale en forme de double queue-d'aronde correspondante.

9. Dispositif mobilier selon l'une quelconque des revendications précédentes, dans lequel le meuble est un panneau (60), le noyau (66) étant constitué par un prolongement d'un bord de ce panneau qui est d'une seule pièce avec lui.

10. Dispositif mobilier selon l'une quelconque des revendications 1 à 8, dans lequel le meuble est un boîtier (1), le noyau (25) étant rapporté sur une face latérale extérieure du boîtier, un autre noyau plein (28) étant rapporté sur la face latérale intérieure correspondante du boîtier de façon à faire face au premier noyau, des moyens de serrage (31, 32) étant prévus pour serrer les deux noyaux l'un vers l'autre.

## Patentansprüche

1. Bewegliche Vorrichtung insbesondere für Außenmöbel mit einem Möbel (1, 60, 70) und einem Möbelgestell, wobei das Gestell umfaßt:
- wenigstens einen Fuß (7), der ein Hohlprofil (11) aufweist, das eine Innenrinne beschreibt, wobei diese Rinne eine maximale, vorgegebene Breite aufweist und in das Äußere des Profils durch einen Spalt übergeht, wobei dieser Spalt eine geringere Breite aufweist als die genannte maximale Breite; und
- Befestigungsmittel (25), um das Möbel an dem Fuß zu befestigen, die im Querschnitt eine Form haben, die an die genannte Rinne angepaßt ist und in dieser aufgenommen sind,
dadurch gekennzeichnet,
daß die genannten Befestigungsmittel einen Vollkern (25) aufweisen, der mit einer Seitenfläche des Möbels fest verbunden ist, von dieser vorspringend und sich entlang dieser erstreckend ausgebildet ist über eine Länge, die von einer Unterseite des Möbels bis zu einem äußeren Ende des Fußes (7) reicht, das zum auf den Boden stellen bestimmt ist, wobei der Kern ausgebildet ist, um wenigstens einen Teil des Gewichts des Möbels abstützen zu können.

2. Bewegliche Vorrichtung gemäß Anspruch 1,
bei dem der besagte Vollkern eine Mehrzahl von Abschnitten aufweist, von denen der eine in der Verlängerung des anderen angeordnet ist, nämlich:
- einen ersten Abschnitt (25), der sich entlang der Seitenfläche des Möbels bis zu dessen Unterseite erstreckt und eine erste Querschnittsform aufweist, die insgesamt in der Rille untergebracht ist; und
- wenigstens einen zweiten Abschnitt (13), der sich von der genannten Unterseite bis zu dem Ende des Fußes erstreckt, das zum auf den Boden stellen bestimmt ist, und eine zweite Querschnittsform aufweist, die im Querschnitt betrachtet über eine vorbestimmte Ausdehnung sich bis zum Äußeren der Rinne erstreckt.

3. Bewegliche Vorrichtung gemäß Anspruch 2,
die ein zweites Hohlprofil (12) aufweist, das als Stütze seitlich von dem ersten Hohlprofil (11) angeordnet ist, wobei das zweite Profil eine Innenrinne beschreibt, wobei diese Rinne eine vorgegebene maximale Breite aufweist und in das Äußere des Profils durch einen Spalte übergeht, wobei dieser Spalt eine geringere Breite aufweist als die genannte maximale Breite, wobei die Erstreckung des zweiten Abschnittes des Kerns (53) im Querschnitt eine Form hat, die angepaßt ist an die Rille des zweiten Profils und in dieser aufgenommen ist.

4. Bewegliche Vorrichtung gemäß Anspruch 2 oder 3,
bei der die genannte Erstreckung des zweiten Abschnittes des Kerns (65) bündig an der Unterseite des Möbels (60) anschließt und dieser als Stütze dient.

5. Bewegliche Vorrichtung gemäß einem der Ansprüche 2 bis 4,
bei denen die unterschiedlichen Abschnitte (25, 13) des Kerns gebildet werden durch Kerne, die bestimmt sind sich aufeinander abzustützen.

6. Bewegliche Vorrichtung gemäß einem der vorhergehenden Ansprüche,
bei dem die genannten Füße zweifach vorhanden sind, mit zwei Hohlprofilen (71, 72), die jedes einen Kern (76) aufnehmen, sowie einem dritten Hohlprofil (74), das angeordnet ist, um sich quer unter der Unterseite des Möbels zu erstrecken und sich von einem Fuß zum anderen zu spannen und eine innenliegende Rinne beschreibend, wobei diese Rinne eine vorgegebene maximale Breite aufweist und ins Äußere des Profils über einen Spalt übergeht, wobei dieser Spalt eine geringere Breite als die genannte maximale Breite aufweist, und einem dritten Kern (78), der im Querschnitt eine Form aufweist, die an die Rinne des dritten Profils (74) angepaßt ist und in dieser aufgenommen ist, wobei der dritte Kern zwei Enden hat, die Stirnflächen zu den Kernen (76) der Füße aufweisen und an diesen befestigt sind.

7. Bewegliche Vorrichtung gemäß einem der vorhergehenden Ansprüche,
bei der die Rinne und der Kern (25) einen Querschnitt in Form eines Schwalbenschwanzes aufweisen.

8. Bewegliche Vorrichtung gemäß Anspruch 3,
wobei die Rillen des ersten und zweiten Hohlprofils (11, 12) einen Querschnitt in Schwalbenschwanzform haben, während der zweite Abschnitt (13) des Kerns einen Querschnitt in Form eines entsprechenden Doppelschwalbenschwanzes aufweisen.

9. Bewegliche vorrichtung gemäß einem der vorhergehenden Ansprüche,
bei denen das Möbel eine Tafel (60) ist, und der Kern (66) durch eine Verlängerung eines Randes dieser Tafel gebildet wird, die mit diesem einstückig ist.

10. Bewegliche Vorrichtung gemäß einem der Ansprüche 1 bis 8,
bei dem das Möbel ein Gehäuse (1) ist, wobei der Kern (25) an einer seitlichen Außenfläche des Gehäuses angeformt ist, ein weiterer Vollkern (28) entsprechend auf der seitlichen Innenfläche des Gehäuses angebracht ist, in der Art, um an den ersten Kern anzugrenzen und wobei Verbindungsmittel (31, 32) vorgesehen sind, um die zwei Kerne einen mit dem anderen zu verbinden.

## Claims

1. Furniture device, in particular for street furniture, comprising an item of furniture (1, 60, 70) and an underframe for an item of furniture, the underframe comprising:
- at least one leg (7) which has a hollow profile section (11) defining an internal groove, the groove having a determinate maximum width and opening on the outside of the profile section through a slot, the slot having a width which is less than the said maximum width; and
- assembly means (25) for assembling the furniture onto the leg, which assembly means have in cross section a shape adapted to that of the said groove and are received in the latter,
characterised in that the said assembly means comprise a solid core (25), rigidly connected with a lateral face of the item of furniture, projecting from the latter, and extending along the latter over a length such that it extends beyond a lower face of the item of furniture as far as an end of the leg (7) intended to rest on the ground, the core being arranged to be able to support at least part of the weight of the item of furniture.

2. Furniture device according to Claim 1, wherein the said solid core comprises a plurality of portions arranged in extension of one another, that is to say :
- a first portion (25) extending along the lateral face of the item of furniture as far as the lower face of the latter and having a first section shape housed as a whole in the groove; and
- at least a second portion (13) extending beyond the said lower face as far as the end of the leg intended to rest on the ground, and having a second section shape extending, as seen in cross section, outside the groove for a predetermined extension.

3. Furniture device according to Claim 2, which comprises a second hollow profile section (12) arranged to bear laterally on the first hollow profile section (11), the second profile section defining an internal groove, the groove having a determinate maximum width and opening on the outside of the profile section through a slot, the slot having a width which is less than the said maximum width, the said extension of the second core portion (53) having, in cross section, a shape adapted to the groove of the second profile section and being received in the latter.

4. Furniture device according to Claim 2 or Claim 3, wherein the said extension of the second core portion (65) is flush with the lower face of the item of furniture (60) and serves as a support for it.

5. Furniture device according to any one of Claims 2 to 4, wherein the different core portions (25, 13) are constituted by separate cores bearing one upon the other.

6. Furniture device according to any one of the preceding claims, wherein the said legs are two in number, comprising two hollow profile sections (71, 72), each receiving a core (76), a third hollow profile section (74) being arranged to fit laterally on the lower face of the item of furniture while extending from one leg to the other and defining an internal groove, the groove having a determinate maximum width and opening on the outside of the profile section through a slot, the slot having a width which is less than the said maximum width, and a third core (78) having, in cross section, a shape adapted to the groove of the third profile section (74) being received therein, the third core having two ends facing the cores (76) of the legs and fixed to the latter.

7. Furniture device according to any one of the preceding claims, wherein the groove and the core (25) have a cross section in the shape of a dovetail.

8. Furniture device according to Claim 3, wherein the grooves of the first and second hollow profile sections (11, 12) have a cross section in the shape of a dovetail while the second portion (13) of the core has a cross section in the shape of a corresponding double dovetail.

9. Furniture device according to any one of the preceding claims, wherein the item of furniture is a panel (60), the core (66) being constituted by an extension of one edge of the panel which is in one piece with it.

10. Furniture device according to any one of Claims 1 to 8, wherein the item of furniture is a case (1), the core (25) being mounted on an outer lateral face of the case, another solid core (28) being mounted on the corresponding inner lateral face of the case so as to face the first core, clamping means (31, 32) being provided to clamp the two cores towards one another.
